# NEUE EUROPÄISCHE PATENTSCHRIFT

(11) **EP 0 290 757 B2**
(45) Veröffentlichungstag und Bekanntmachung des Hinweises auf die Entscheidung über den Einspruch: **11.12.1996**
(45) Hinweis auf die Patenterteilung: 12.02.1992
(21) Anmeldenummer: 88104547.0
(22) Anmeldetag: 22.03.1988
(51) Int. Cl.: H01M 2/10

(54) **Vorrichtung zur Aufstellung von Akkumulatoren zur Notstromversorgung**
Arrangement for mounting emergency storage batteries
Dispositif pour installer des accumulateurs de secours

(30) Priorität: 04.05.1987 DE 8706342 U
(43) Veröffentlichungstag der Anmeldung: 17.11.1988
(73) Patentinhaber: Accumulatorenwerke Hoppecke Carl Zoellner & Sohn GmbH & Co. KG, D-59914 Brilon (DE)
(72) Erfinder: Bernardi, Walter, Dipl.-Ing., D-5790 Brilon 1 (DE); Kesper, Heinrich, Dipl.-Ing., D-3542 Willingen (DE); Erlemeyer, Franz, D-5790 Brilon 2 (DE)
(74) Vertreter: Stenger, Watzke & Ring Patentanwälte

(56) Entgegenhaltungen:
- DE-A- 1 965 664
- DE-A- 2 709 056
- DE-A- 2 737 365
- US-A- 2 870 855

## Beschreibung

Die Erfindung betrifft eine Vorrichtung zur Aufstellung von Akkumulatoren zur Notstromversorgung mit einem U-förmigen Haltegestell, insbesondere aus Stahl, in welchem ein oder mehrere Akkumulatoren in Reihe angeordnet sind, wobei die freien U-Schenkel des Haltegestells durch Zugstangen miteinander verbunden sind.

Die Aufstellung von ortsfesten Akkumulatoren zur Notstromversorgung ist problematisch bei Schwingungsbeanspruchungen bzw. bei initiierten Erschütterungen. So muß bei der Aufstellung derartiger Batterien in Kernkraftwerken sichergestellt sein, daß diese auch bei erheblichen mechanischen Einwirkungen, z.B. bei Erdbeben, Flugzeugabstürzen auf ein Reaktorgebäude und dgl. Gefahrensituationen, nicht umfallen oder aus ihrem elektrischen Verbund gerissen werden. Auch bei starken mechanischen Beanspruchungen müssen die Batterien funktionsfähig bleiben, d.h. in ihrer normalen Aufstellungsposition gehalten werden. Zu diesem Zweck ist es bekannt, ein U-förmiges Haltegestell aus Stahl zu verwenden, in welchem die Akkumulatoren in Reihe angeordnet sind. Zwischen den einzelnen Akkumulatoren sind die freien U-Schenkel des Haltegestells durch Zugstangen miteinander verbunden, die die seitlichen Wände des Haltegestells mit den Batteriegehäusen verspannen. Es handelt sich um eine kraftschlüssige Verbindung, bei der die Spannkraft in das Batteriegefäß eingeleitet wird, so daß mechanische Beanspruchungen auftreten. Diese führen im Laufe der Zeit dazu, daß sich in den Batteriegehäusen Risse zeigen, die wiederum die Funktionsfähigkeit der Batterien in Frage stellen.

Der Erfindung liegt die Aufgabe zugrunde, eine verbesserte Vorrichtung zur Aufstellung von Akkumulatoren vorzuschlagen, die Schwingungsbeanspruchungen und initiierte Erschütterungen, beispielsweise bei Erdbeben, ausfällt und jede mechanische Beanspruchung der Batteriegehäuse durch Verspannungen vermeidet.

Die Aufgabe ist erfindungsgemäß dadurch gelöst, daß die Akkumulatoren im Haltegestell durch Formschlußteile gehalten sind, die zwischen den U-Schenkeln des Haltegestells und den Akkumulatoren angeordnet sind. Dabei handelt es sich insbesondere um der Gehäuseform der Akkumulatoren angepaßte, konisch ausgebildete, nach unten schmaler werdende Längsplatten, die durch die Zugstangen in ihrer Position gehalten sind. Zweckmäßigerweise kann jede Zugstange in einem Distanzrohr angeordnet sein, das größer oder gleich der Gehäusebreite des Akkumulators an der Anordnungsstelle ist und an dem die einander gegenüberliegend angeordneten Längsplatten zur Anlage kommen, so daß sichergestellt ist, daß über die Zugstangen keine Kräfte mehr auf die Zellengefäße übertragen werden können.

Gemäß einer zweckmäßigen Ausgestaltung der Erfindung ist vorgesehen, zusätzlich den Längsplatten entsprechende konische Querplatten zwischen den Batterien anzuordnen, um alle vier Seiten der Batteriegehäuse durch Formschluß miteinander zu verbinden und zu halten.

In senkrechter Richtung sind die Akkumulatoren durch Spannbügel gehalten, die über beidseitige Spannstangen mit Halteblechen verbunden sind, die an gegenüberliegenden Seiten der Akkumulatoren an den freien U-Schenkeln des Haltegestells befestigt sind. Vorzugsweise sind die Haltebleche zwischen den Längsplatten und den U-Schenkeln angeordnet und von den Zugstangen gehalten.

Mit der Erfindung ist eine positionssichere Aufstellung von Akkumulatoren zur Notstromversorgung auch bei Erschütterungen oder anderen mechanischen Einwirkungen ermöglicht, wobei durch den Formschluß negative Einwirkungen auf die Batteriegehäuse vermieden sind. Hierdurch wird eine hohe Zeitstandsfestigkeit erreicht.

Weitere Einzelheiten, Merkmale und Vorteile des Gegenstandes der Erfindung ergeben sich aus der nachfolgenden Beschreibung der zugehörigen Zeichnung, in der schematisch ein erfindungsgemäß ausgebildetes Haltegestell für Bleiakkumulatoren zur Notstromversorgung von Kraftwerken dargestellt ist.

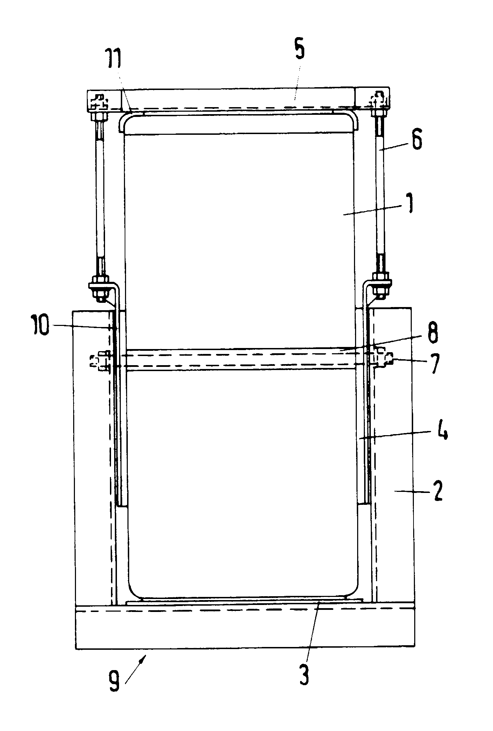

Die Haltevorrichtung 9 für in Reihe angeordnete Akkumulatorenzellen 1, von denen nur die vorderste in der Zeichnung zu erkennen ist, besteht aus einem U-förmigen Haltegestell 2 aus Stahl, dessen Bodenteile durch eine Bodenplatte 3 zur Schaffung einer ebenen Auflagefläche miteinander verbunden sind. Zwischen den freien U-Schenkeln des Stahlgestells 2 sind auf der Bodenplatte 3 die verschiedenen Zellen 1 hintereinander angeordnet.

Zwischen den einzelnen Zellen 1 sind die freien U-Schenkel des Haltegestells 2 durch Zugstangen 7 miteinander verbunden, die in Distanzrohren 8 angeordnet sind. Die Distanzrohre 8 sind etwa 1 mm größer als die Gehäusebreite der Zellen 1 an dieser Stelle ausgebildet. In die Zwischenräume zwischen den U-Schenkeln des Haltegestells 2 und den Batteriegehäusen sind der Konizität der Batteriegehäuse entsprechend ausgebildete Längsplatten 4 angeordnet, die von den Zugstangen 7 gehalten werden. Ferner befinden sich zwischen den Längsplatten 4 und den U-Schenkeln des Haltegestells 2 Haltebleche 10, die rechtwinklig nach außen abgebogen enden und Teil einer Vertikalbefestigung der Batteriekästen sind. Nach Festschrauben der gegenüberliegenden Muttern der Zugstangen 7, die in der Zeichnung erkennbar sind, ist eine formschlüssige Verbindung zwischen dem Haltegestell 2 und den Gehäusen der Zellen 1 dargestellt.

Außer den Längsplatten 4 sind entsprechend ausgebildete, ebenfalls konische Querplatten zwischen den einzelnen Zellen 1 vorgesehen, die in der Zeichnung nicht erkennbar sind, so daß alle vier Seiten der Zellengehäuse durch formschlüssige Verbindung gehalten sind und ein geschlossener Verbund der Zellen sowohl in Längs- wie auch in Querrichtung gegeben ist.

Die vertikalwirkende Haltevorrichtung besteht aus über den Batteriegehäusen angeordneten Spannbügeln 5 mit Spannstangen 6, die an den Abwinklungen der Haltebleche 10 enden und über die dargestellten Muttern anziehbar sind. Dabei stellen zu beiden Seiten abgerundete Blechteile 11 an den Spannbügeln 5 die Positionierung sicher.

### Bezugszeichenliste:

- 1: Akkumulator
- 2: Haltegestell
- 3: Bodenplatte
- 4: Formschlußteil
- 5: Spannbügel
- 6: Spannstange
- 7: Zugstange
- 8: Distanzrohr
- 9: Haltevorrichtung
- 10: Halteblech
- 11: Blechteil

## Patentansprüche

1. Vorrichtung zur Aufstellung von Akkumulatoren, deren Gehäuse Konizität aufweisen, zur Notstromversorgung mit einem U-förmigen Haltegestell (2), inbesondere aus Stahl, in weichem ein oder mehrere Akkumulatoren (1) in Reihe angeordnet sind, wobei die freien U-Schenkel des Haltegestells (2) durch Zugstangen (7) miteinander verbunden sind,
**dadurch gekennzeichnet,**
daß die Akkumulatoren (1) im Haltegestell (2) durch Formschlußteile (4) in Form von der Konizität der Akkumulatorengehäuse entsprechend ausgebildeten konischen längsplatten gehalten sind, die zwischen den U-Schenkeln des Haltegestells (2) und den Akkumulatoren (1) angeordnet sind.

2. Vorrichtung nach Anspruch 1, dadurch gekennzeichnet, daß die Formschlußteile (4) der Gehäuseform der Akkumulatoren (1) angepaßte, konisch ausgebildete, nach unten schmaler werdende Längsplatten sind, die durch die Zugstangen (7) in ihrer Position gehalten sind.

3. Vorrichtung nach Anspruch 1 und 2, dadurch gekennzeichnet, daß jede Zugstange (7) in einem Distanzrohr (8) angeordnet ist, das größer oder gleich der Gehäusebreite des Akkumulators (1) an der Anordnungsstelle ist, wobei an den einander gegenüberliegend angeordneten Formschlußteilen, inbesondere Längsplatten (4) die Distanzrohre zur Anlage kommen.

4. Vorrichtung nach einem der Ansprüche 1 bis 3, dadurch gekennzeichnet, daß zusätzlich konische Querplatten zwischen den Akkumulatoren (1) angeordnet sind.

5. Vorrichtung nach einem der Ansprüche 1 bis 4, dadurch gekennzeichnet, daß die Akkumulatoren (1) in senkrechter Richtung durch Spannbügel (5) gehalten sind, die über beidseitige Spannstangen (6) mit Halteblechen (10) verbunden sind, die an gegenüberliegenden Seiten der Akkumulatoren (1) am Haltegestell (2) befestigt sind.

6. Vorrichtung nach Anspruch 5, dadurch gekennzeichnet, daß die Haltebleche (10) zwischen den Längsplatten (4) und den U-Schenkeln des Haltegestells (2) angeordnet und von den Zugstangen (7) gehalten sind.

## Claims

1. A device for accommodating emergency power supply accumulators having conical casings, the device comprising a U-shaped retaining frame (2), more particularly of steel, in which one or more accumulators (1) is or are arranged in a row, the free U-arms of the retaining frame (2) being interconnected by tie rods (7), characterised in that the accumulators (1) are held in the retaining frame (2) by positive-engagement elements (4) in the form of conical longitudinal plates, the same corresponding to the conicity of the accumulator casings and being disposed between the U-arms of the retaining frame (2) and the accumulators (1).

2. A device according to claim 1, characterised in that the positive-engagement elements (4) are conical and downwardly narrowing longitudinal plates which are adapted to the shape of the accumulator casings and retained in position by the tie rods (7).

3. A device according to claims 1 and 2, characterized in that each tie rod (7) is disposed in a spacer tube (8) larger than or equal to the width of the accumulator casing at the place where disposed, the spacer tubes abutting the positive-engagement elements, more particularly longitudinal plates (4), the same being disposed opposite one another.

4. A device according to any one of claims 1 to 3, characterised in that conical transverse plates are also disposed between the accumulators (1).

5. A device according to any one of claims 1 to 4, characterised in that the accumulators (1) are retained vertically by clamping yokes (5) connected by way of clamping rods on both sides to retaining plates (10) secured to the retaining frame (2) on opposite sides of the accumulators (1).

6. A device according to claim 5, characterised in that the retaining plates (10) are disposed between the longitudinal plates (4) and the U-arms of the retaining frame (2) and are retained by the tie rods (7).

## Revendications

1. Dispositif pour installer des accumulateurs de secours dont les boîtiers présentent une conicité et qui comportent un bâti de maintien (2) en forme de U, en particulier en acier, dans lequel un ou plusieurs accumulateurs (1) sont disposés en série, les branches libres du U du bâti de maintien (2) étant reliés les unes aux autres par des tirants (7), caractérisé en ce que les accumulateurs (1) sont maintenus dans le bâti de maintien (2) par des pièces de liaison géométrique (4) en forme de plaques longitudinales coniques réalisées conformément à la conicité des boîtiers des accumulateurs qui sont disposées entre les branches du U du bâti de maintien (2) et les accumulateurs (1).

2. Dispositif selon la revendication 1, caractérisé en ce que les pièces de liaison géométrique (4) sont des plaques longitudinales adaptées à la forme du boîtier des accumulateurs (1) réalisées à section variable, devenant plus étroites vers le bas, plaques qui sont maintenues dans leur position par les tirants (7).

3. Dispositif selon la revendication 1 ou 2, caractérisé en ce que chaque tirant (7) est disposé dans une entretoise tubulaire (8) sont la longueur est supérieure ou égale à la largeur du boîtier de l'accumulateur (1) à l'endroit de l'emplacement, les entretoises venant reposer sur les pièces de liaison géométrique opposées, notamment les plaques longitudinales (4).

4. Dispositif selon l'une des revendications 1 à 3, caractérisé en ce que l'on dispose de façon supplémentaire des plaques transversales à section variable entre les accumulateurs (1).

5. Dispositif selon l'une des revendications 1 à 4, caractérisé en ce que les accumulateurs (1) sont maintenus en position verticale par des étriers de tension (5) qui sont reliés par des tiges de traction (6) situées des deux côtés aux tôles de maintien (10) qui sont fixées sur les côtés opposés des accumulateurs (1) au bâti de maintien (2).

6. Dispositif selon la revendication 5, caractérisé en ce que les tôles de maintien (10) sont disposées entre les plaques longitudinales (4) et les branches du U du bâti de maintien (2) et sont maintenues par des tirants (7).
